# EUROPÄISCHE PATENTANMELDUNG

(11) **EP 1 331 636 A2**
(43) Veröffentlichungstag der Anmeldung: **30.07.2003**
(21) Anmeldenummer: 03001662.0
(22) Anmeldetag: 24.01.2003
(51) Int. Cl.: G11B 7/26

(54) **Verfahren und Vorrichtung zum Herstellen optischer Datenträger**

(30) Priorität: 24.01.2002 DE 10202559
(71) Anmelder: Krauss-Maffei Kunststofftechnik GmbH, 80997 München (DE)
(72) Erfinder: Weidenhaupt, Klaus Peter, 80803 München (DE)
(74) Vertreter: Wilhelm, Ludwig, Dipl.-Phys.

(57) **Zusammenfassung**

Die Erfindung bezieht sich auf ein Verfahren und eine Vorrichtung zum Herstellen optischer Datenträger mit Substraten, wobei die Substrate über ein einzelnes, lineares und schrittweise arbeitendes Transportsystem (10) von Spritzgießmaschinen (I, II) über Bearbeitungsstationen (A, B) zu Trockenstationen (16, 18) transportiert werden.

Um den Durchlauf der Substrate zu beschleunigen wird vorgeschlagen, die Transportvorrichtung (10; Walkingbeam) in einer Folge von Einzel- und Doppel- oder Mehrfachschritten zu betreiben.

## Beschreibung

Die Erfindung bezieht sich auf ein Verfahren zum Herstellen optischer Datenträger wie DVD, CD sowie insbesondere auf beschreibbare optische Datenträger wie CD-R, DVD-R, OBC-R usw. gemäß dem Oberbegriff des Anspruchs 1 bzw. des Oberbegriffs des Patentanspruchs 4.

Ein derartiges Verfahren und eine derartige Vorrichtung sind aus der WO 01/63605 A1 bekannt. Dabei werden zwei unterschiedliche Substrate einer DVD in zwei Spritzgießaggregaten hergestellt und abwechselnd auf einem linearen, schrittweise arbeitenden Transportsystem abgelegt, das die Substrate schrittweise über eine Metallisierungsstation und eine Beschichtungsstation schließlich einer Fügestation zuführt, in der die Substrate zu einer fertigen DVD zusammengefügt werden. Die Behandlung der Substrate erfolgt jeweils paarweise, und das Transportsystem wird mit Doppelschritten betrieben, d.h. bei jedem Doppelschritt werden die Substrate um zwei Positionen des linearen Transportsystems versetzt.

Dieses Transportsystem ist ein sogenannter "Walkingbeam" mit einem horizontal feststehenden und vertikal bewegbaren Transportbalken (sogenannter "Beam") und einem horizontal bewegbaren und vertikal feststehenden Transportrahmen (sogenannter "Walk") mit zwei balkenähnlichen Elementen, die sich parallel zum Transportrahmen an dessen Seiten erstrecken. Der Transportbalken, weist eine lineare Anordnung von Tragelementen mit Zentrierstiften auf, wobei die Substrate auf dem Tragelementen abgelegt werden können und in ihrem Mittenbereich gestützt sind. Demgegenüber weist der Transportrahmen an den balkenähnlichen Elementen Auflageflächen für den Umfangsbereich der Substrate auf. Zum Transport der Substrate wird der Transportbalken abgesenkt, so daß die Substrate auf den Auflageflächen aufliegen und die Zentrierstifte nicht mehr in Kontakt mit den Substraten sind. Anschließend wird der Transportrahmen um eine Strecke, die zwei Positionen entspricht, verschoben, und der Transportbalken wird angehoben und nimmt die Substrate wieder auf. Als Ergebnis sind die Substrate auf dem Transportbalken um zwei Positionen versetzt worden. Anschließend wird der Transportrahmen zurückbewegt, so daß ein neuer Schritt beginnen kann. Das Versetzen um zwei Positionen ist bei diesem Verfahren wegen der paarweisen Behandlung der Substrate erforderlich; in der Regel versetzen Walkingbeam-Transportsysteme die Substrate nur um jeweils eine Position pro Schritt. Hinsichtlich weiterer Einzelheiten des Transportsystems wird auf die eingangs genannte Schrift verwiesen.

Zwar kann mit dem oben beschriebenen Verfahren bzw. der Vorrichtung automatisch ohne aufwendige Zusatzmaßnahmen sichergestellt werden, daß beide Substrate stets im richtigen Produktionszyklus fertig sind und an der Fügestation bereitgestellt werden. Andererseits hat dieses Transportsystem zwei Beladepositionen und zwei Entladepositionen, so daß das System insgesamt um zwei Positionen verlängert ist; des weiteren sind spezielle Handhabungsgeräte erforderlich, und die Durchlaufzeit für die Substrate ist länger.

Demgegenüber könnte man daran denken, die Substrate einzeln zu handhaben, so daß keine speziellen Handhabungsgeräte erforderlich sind, und das Transportsystem mit Einzelschritten zu betreiben, so daß keine zusätzlichen Belade- und Entladepositionen erforderlich sind. Dies führt aber zu einer weiter erhöhten Durchlaufzeit für die Artikel.

Demgegenüber liegt der Erfindung die Aufgabe zugrunde, das eingangs genannte Verfahren bzw. die eingangs genannte Vorrichtung so weiter zu entwickeln, daß während der Herstellung der Datenträger Substrate mit kurzer Durchlaufzeit zwei unterschiedlichen Bearbeitungsstationen zugeführt werden können, wobei für die Vorrichtung eine kompakte Bauweise angestrebt ist.

Die Lösung dieser Aufgabe erfolgt durch ein Verfahren gemäß Patentanspruch 1 bzw. durch eine Vorrichtung gemäß Anspruch 4; die abhängigen Ansprüche betreffen vorteilhafte Ausgestaltungen der Erfindung.

Erfindungsgemäß wird vorgeschlagen, das lineare Transportsystem während des Transports mit einer Kombination aus Einzel- und Doppel- oder Mehrfachschritten zu betreiben, d.h. die Substrate um eine Einzelposition bzw. zwei oder mehr Positionen zu versetzen. Im Vergleich zu einer Einrichtung, die nur in Einzelschritten transportiert, kann die Durchlaufzeit erheblich abgesenkt werden.

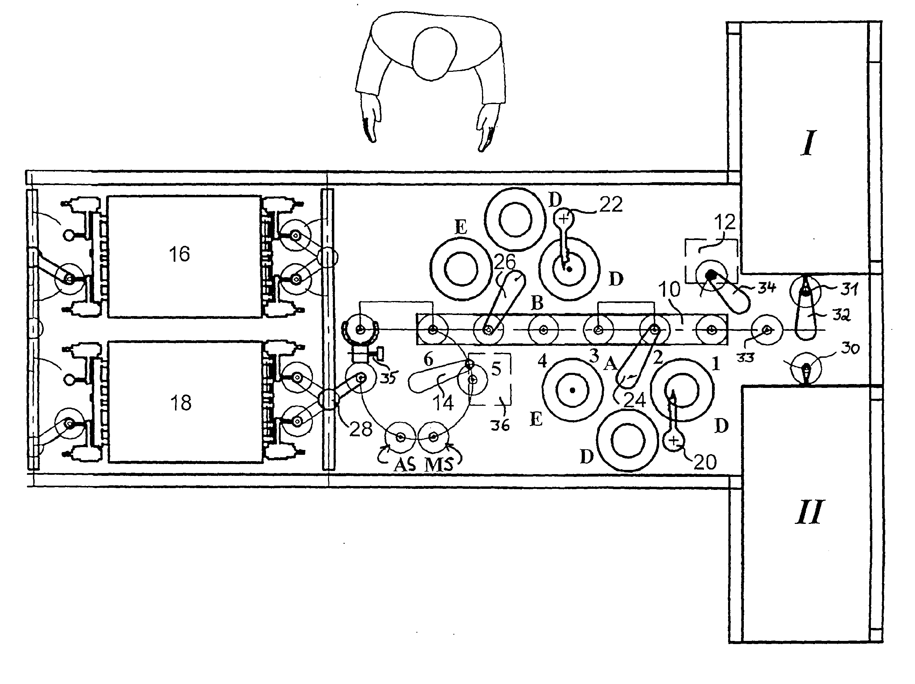

Ein Ausführungsbeispiel der Erfindung wird anhand der beigefügten Zeichnung sowie einer als Anhang beigefügten Tabelle erläutert.

Die Figur zeigt in Aufsicht eine Vorrichtung zum Herstellen von optischen Datenträgern, wie CD's, DVD's, CD-R, DVD-R, OBC-R usw. In einer ersten Spritzgießmaschine I mit nachgeschalteter Kühlstrecke werden erste Substrate (A-Substrate) in an sich bekannter Weise hergestellt, und entsprechend werden zweite Substrate (B-Substrate) in einer zweiten Spritzgießmaschine II mit nachgeschalteter Kühlstrecke hergestellt. Am Ende der Kühlstrecken werden die Substrate an Übergabestationen 30 und 31 für den Weitertransport bereitgestellt. Mittels einer ersten Handhabungseinrichtung 32 (sogenanntes Pick and Place) werden nacheinander jeweils ein A-Substrat und ein B-Substrat auf einer Zwischenstation 33 abgelegt. Von dort werden die Substrate mittels einer zweiten Handhabungseinrichtung 34 zunächst einer ersten Prüfstation 12 zugeführt und anschließend auf die Beladeposition 1 einer diskret arbeitenden linearen Transportvorrichtung 10 vom Typ eines Walkingbeam abgelegt. Gegebenenfalls kann die Prüfstation 12 auch entfallen und die Substrate werden ohne Zwischenschaltung der Zwischenstation 33 direkt auf die Beladeposition der Transportvorrichtung 10 abgelegt. Diese Transporteinrichtung 10 umfaßt insgesamt 6 Positionen, d.h. neben der Beladeposition 1 eine Entnahmeposition 2 für A-Substrate, eine Beladeposition 3 für A-Substrate, eine Entnahmeposition 4 für B-Substrate, eine Beladeposition 5 für B-Substrate sowie eine Entnahmeposition 6. Substrate, die den Transportweg der Transporteinrichtung 10 durchlaufen haben, werden von einer Übergabeeinrichtung 14 aus der Entnahmeposition 6 entnommen und in eine zweite Prüfstation 36, beispielsweise einen Scanner gelegt. Nach der Prüfung werden die Substrate von der Übergabeeinrichtung 14 weitertransportiert und überstreichen dabei eine Ablagespindel AS für Substrate, die für schlecht befunden worden sind (Ausschußspindel) sowie eine Ablagespindel MS für Mustersubstrate. Damit können während des laufenden Produktionsprozesses einzelne für gut befundene Substrate ausgeschleust und einer weitergehenden Qualitätsprüfung unterzogen werden. Für gut befundene und nicht auf der Spindel MS abgelegte Substrate werden von der Übergabeeinrichtung 14 an eine Wendeeinrichtung 35 weitertransportiert, wo die Substrate um 180° gewendet werden. Anschließend werden die Substrate mittels einer weiteren Übergabeeinrichtung 28 einer von zwei Trocknerstrecken 16, 18 zugeführt, in denen die Substrate getrocknet werden.

Seitlich der Transporteinrichtung 10 sind Bearbeitungsstationen A bzw. B, wobei A-Substrate in der Bearbeitungsstation A und B-Substrate in der Bearbeitungsstation B bearbeitet werden. Dazu wird das Substrat aus der jeweiligen Position zwei bzw. vier über ein Handhabungsgerät 24, 26 entnommen, in einer Bearbeitungseinheit D mit Farbstoff aus schwenkbaren Dosiergeräten 20, 22 beschichtet (Dye-Auftrag für die Schreibschicht der CD-R, DVD-R usw.), und in einer Bearbeitungsstation E werden die Kanten der Substrate gereinigt (sogenannter Edge-Cleaner), beispielsweise durch Waschen. Anschließend werden die Substrate auf der entsprechenden Beladeposition 3 bzw. 5 auf der Transporteinrichtung 10 wieder abgelegt.

Wie bereits erwähnt, arbeitet die Transporteinrichtung 10 schrittweise, und zwar in Einzelschritten, bei denen die Substrate jeweils um eine Position in Richtung auf die Trocknerstrecken versetzt werden, und in Doppelschritten, in denen Substrate um zwei Positionen in diese Richtung versetzt werden. Zwischen diesen Schritten liegen Arbeitstakte, während derer Substrate auf dem Transportbalken der Transporteinrichtung 10 abgelegt werden bzw. von dem Transportbalken abgenommen werden. Ein Substrat durchläuft den Transportweg in einem Zyklus von vier Takten, die jeweils durch Einzeloder Doppelschritte getrennt sind.

Der Prozessablauf soll anhand der beigefügten Tabelle I näher erläutert werden, wobei folgende Terminologie dem besseren Verständnis dienen soll:
- Disc zu A: = A-Substrat, das der Bearbeitungsstation A zugeführt wird;
- Disc von A: = A-Substrat, das in der Bearbeitungsstation A bearbeitet worden ist;
- Disc zu B: = B-Substrat, das der Bearbeitungsstation B zugeführt wird;
- Disc von B: = B-Substrat, das in der Bearbeitungsstation B bearbeitet worden ist.

In einem ersten Takt wird die Transporteinrichtung 10 in vier Positionen gleichzeitig beund entladen. So wird in der ersten Position ein A-Substrat (Disc) von dem Spritzaggregat I auf die Transporteinrichtung abgelegt, in der dritten Position wird ein in der Bearbeitungsstation A bearbeitetes A-Substrat abgelegt, in der vierten Position wird ein B-Substrat (Disc) zur Bearbeitung in der Bearbeitungsstation B entnommen, und von der sechten Position wird ein bearbeitetes B-Substrat von der Übergabeeinrichtung 14 entnommen an die Prüfstation 36 übergeben. Von dort wird dieses B-Substrat wie oben beschrieben weitergetaktet und schließlich an eine der Trocknerstationen 16, 18 übergeben. Diesem ersten Takt schließt sich ein Einzelschritt an, in dem A-Substrate von der ersten Position in die zweite Position bzw. von der dritten Position in die vierte Position transportiert werden.

In einem zweiten Takt wird das A-Substrat mit dem Handhabungsgerät 24 aus der zweiten Position entnommen und an die A-Bearbeitungsstation übergeben während das bearbeitete A-Substrat in der vierten Position verbleibt. Diesem Takt schließt sich ein Doppelschritt an, in dem das bearbeitete A-Substrat von der vierten Position in die sechste Position transportiert wird.

In einem dritten Takt wird in der ersten Position ein B-Substrat von der Spritzgießmaschine II aufgelegt, und das bearbeitete A-Substrat wird von der sechsten Position entnommen. Es schließt sich ein Doppelschritt an, bei dem das B-Substrat von der ersten Position in die dritte Position versetzt wird.

In einem vierten Takt verbleibt das B-Substrat in der dritten Position, während ein bearbeitetes B-Substrat mittels des Handhabungsgeräts 26 aus der Bearbeitungsstation B entnommen und in der fünften Position aufgelegt wird. Es schließt sich ein Einzelschritt an, in dem das noch unbearbeitete B-Substrat von der dritten Position in die vierte Position und das schon bearbeitete B-Substrat von der fünften Position in die sechste Position transportiert werden. Anschließend folgt wieder der bereits erläuterte erste Takt.

Es ist somit ersichtlich, daß erfindungsgemäß nur vier Einzel- und Doppelschritte erforderlich sind, um Substrate von der Beladeposition über die jeweiligen Bearbeitungsstationen zu der Entnahmeposition zu transportieren; bei einem Transport in Einzelschritten wären sechs Schritte erforderlich.

Bevorzugtes Anwendungsgebiet der Erfindung ist die Herstellung von beschreibbaren optischen Datenträgern, wie zum Beispiel CD-R und DVD-R. Bei der Herstellung von CD-R's handelt es sich bei den Substraten A und B um identische Substrate mit jeweils 1,2 mm Dicke. Bei der Herstellung von DVD-R's unterscheiden sich die Substrate A und B. Diese jeweils 0,6 mm dicken Substrate müssen nach dem Durchlaufen der Trocknerstationen 16 und 18 noch zu einer fertigen DVD-R mit 1,2 mm Dicke zusammengefügt werden.

| **Bezugszeichenliste** | |
|---|---|
| I | Spritzgießmaschine mit Kühlstrecke für A-Substrate |
| II | Spritzgießmaschine mit Kühlstrecke für B-Substrate |
| A | Bearbeitungsstation für A-Substrate |
| B | Bearbeitungsstation für B-Substrate |
| D | Dye-Töpfe (Farbaufttragstöpfe) |
| E | Edgecleaner (Randreinigungstöpfe) |
| AS | Spindel für Ausschussteile |
| MS | Spindel für Musterteile |
| 1 | Erste Position (Beladeposition) |
| 2 | Zweite Position (Entnahmeposition für A-Substrate) |
| 3 | Dritte Position (Beladepostion für fertige A-Substrate) |
| 4 | Vierte Position (Entnahmeposition für B-Substrate) |
| 5 | Fünfte Position (Beladeposition für fertige B-Substrate) |
| 6 | Sechste Position (Entnahmeposition) |
| 10 | Transportsystem (walking beam) |
| 12 | Erste Prüfstation (erster Scanner) |
| 14 | Übergabeeinrichtung (Pick&Place 5 = P&P5) |
| 16 | Trocknerstation |
| 18 | Trocknerstation |
| 20 | Dosiergerät für Farbstoff (Dye-Auftragsdüse für A-Substrate) |
| 22 | Dosiergerät für Farbstoff (Dye-Auftragsdüse für B-Substrate) |
| 24 | Handhabungsgerät (Pick&Place 3 = P&P3) |
| 26 | Handhabungsgerät (Pick&Place 4 = P&P4) |
| 28 | Übergabeeinrichtung (Pick&Place 6 = P&P6) |
| 30 | Übergabestation für B-Substrate |
| 31 | Übergabestation für A-Substrate |
| 32 | Erstes Handhabungsgerät (Pick&Place 1 = P&P1) |
| 33 | Zwischenstation |
| 34 | Zweites Handhabungsgerät (Pick&Place 2 = P&P2) |
| 35 | Wendeeinrichtung |
| 36 | Zweite Prüfstation (zweiter Scanner) |

## Patentansprüche

1. Verfahren zum Herstellen optischer Datenträger mit Substraten, die in zwei Spritzgießmaschinen (I, II) hergestellt werden, wobei die Substrate über ein einzelnes lineares, schrittweise arbeitendes Transportsystem (10) von den Spritzgießmaschinen zu einer ersten Bearbeitungsstation, in der ein erstes Substrat bearbeitet wird, zu einer zweiten Bearbeitungsstation, in der das zweite Substrat bearbeitet wird, und zu mindestens einer dritten Bearbeitungsstation (16, 18), in der die Substrate weiterbehandelt werden, transportiert werden,
***dadurch gekennzeichnet*, daß** man das Transportsystem (10) in einer Folge aus Einzel- und Doppel- oder Mehrfachschritten betreibt.

2. Verfahren nach Anspruch 1, ***dadurch gekennzeichnet,* daß** in Transportrichtung des Transportsystems zunächst die erste und anschließend die zweite Bearbeitungsstation aufeinander folgen, wobei man nach dem Beladen des Transportsystems (10) mit einem ersten Substrat zunächst einen Einzelschritt und dann einen Doppelschritt durchführt und beim Beladen mit einem zweiten Substrat zunächst einen Doppelschritt dann einen Einzelschritt.

3. Verfahren nach Anspruch 1 oder 2, wobei das Transportsystem sechs Positionen zur Aufnahme von Substraten aufweist und das Transportsystem in vier sich wiederholenden Takten be- und entladen wird, wobei die erste Position eine Beladeposition ist, die zweite Position eine Entnahmeposition für die erste Bearbeitungsstation, die dritte Position eine Beladestation von der ersten Bearbeitungsstation, die vierte Position eine Entnahmeposition für die zweite Bearbeitungsstation, die fünfte Position eine Beladeposition von der zweiten Bearbeitungsstation und die sechste Position eine Entnahmeposition ist und wobei man
im ersten Takt die erste und die dritte Position belädt, die vierte und die sechste Position entlädt und dann einen Einzelschritt durchführt,
im zweiten Takt die zweite Position entlädt und einen Doppelschritt durchführt,
im dritten Takt die erste Position belädt und die sechste Position entlädt und einen Doppelschritt durchführt und
im vierten Takt die fünfte Position belädt und anschließend einen Einzelschritt durchführt.

4. Vorrichtung zum Transportieren von Substraten zum Herstellen optischer Datenträger aus zwei Substraten, die in zwei Spritzgießmaschinen hergestellt werden, mit einem linearen, schrittweise arbeitenden Transportsystem (10) zum Transportieren der Substrate von den Spritzgießmaschinen an eine erste Bearbeitungsstation, in der erste Substrate bearbeitet werden, zu einer zweiten Bearbeitungsstation, in der zweite Substrate bearbeitet werden, zu mindestens einer weiteren Bearbeitungsstation (16, 18), in der die Substrate weiterbehandelt werden, ***dadurch gekennzeichnet,* daß** das Transportsystem in einer Folge aus Einzel- und Doppel- oder Mehrfachschritten betreibbar ist.

5. Vorrichtung nach Anspruch 4, ***dadurch gekennzeichnet,* daß** das Transportsystem ein Walkingbeam ist.

6. Vorrichtung zum Herstellen optischer Datenträger mit einer Transportvorrichtung nach Anspruch 4 oder 5 und mit zwei Beschichtungsstationen.

7. Vorrichtung nach Anspruch 6, wobei jeweils eine Beschichtungsstation an einer Seite des Transportsystems angeordnet ist und die Bearbeitungsstationen in Transportrichtung des Transportsystems aufeinander folgen.
